# FASCICULE DE BREVET EUROPEEN

(11) **EP 3 350 012 B1**
(45) Date de publication et mention de la délivrance du brevet: **03.06.2020**
(21) Numéro de dépôt: 16777544.4
(22) Date de dépôt: 14.09.2016
(51) Int. Cl.: B60K 35/00, B60K 37/06, G05G 1/015, G05G 1/08, G05G 1/10, G05G 5/00, G05G 5/03, G05G 5/28, F16H 59/02

(54) **SÉLECTEUR D'UNE BOITE DE VITESSE AUTOMATIQUE DE VÉHICULE AUTOMOBILE ET PROCÉDÉ DE SÉLECTION DU MODE DE CONDUITE AUTONOME**
AUTOMATIKGETRIEBESCHALTHEBEL FÜR EIN KRAFTFAHRZEUG UND VERFAHREN ZUR AUSWAHL EINES AUTONOMEN FAHRMODUS
AUTOMATIC GEARBOX SELECTOR FOR A MOTOR VEHICLE AND METHOD FOR SELECTING AUTONOMOUS DRIVING MODE

(30) Priorité: 14.09.2015 FR 1558577
(43) Date de publication de la demande: 25.07.2018
(73) Titulaire: Valeo Comfort and Driving Assistance, 94046 Créteil Cedex (FR)
(72) Inventeur: KUOCH, Siav Kuong, 94046 Créteil CEDEX (FR)
(74) Mandataire: Delplanque, Arnaud
(86) Numéro de dépôt international: PCT/EP2016/071739
(87) Numéro de publication internationale: WO 2017/046189

(56) Documents cités:
- EP-A2- 1 657 475
- WO-A1-2015/033034
- DE-A1-102007 029 594
- DE-A1-102015 212 449
- US-A1- 2011 163 978
- US-A1- 2011 285 618

## Description

La présente invention concerne un sélecteur d'une boite de vitesse automatique de véhicule automobile. L'invention concerne également un procédé de sélection du mode de conduite autonome mis en œuvre avec un tel sélecteur.

De plus en plus de constructeurs automobiles sont à même de proposer des véhicules disposant d'un mode de conduite autonome permettant au véhicule une conduite sans pilote, en totale ou semi autonomie. Ces véhicules sont équipés de radars, télédétection par laser, caméras ou autres capteurs, permettant au véhicule de circuler tout en gérant les éléments environnementaux extérieurs, tels que les feux stop, piétons, autres véhicules en mouvement ou à l'arrêt ou autres obstacles.

Les développements s'orientent actuellement vers la possibilité donnée au conducteur dans certaines situations de conduite d'utiliser ce mode de conduite autonome, notamment sur l'autoroute ou en cas d'embouteillages urbains. En effet, ces situations de conduite sont relativement simples à gérer. Le mode autonome permet ainsi au conducteur d'effectuer d'autres tâches et d'éviter les situations de fatigue en particulier sur de longues distances.

Il peut toutefois être nécessaire que la sélection du mode autonome puisse être interdite dans d'autres situations de conduites.

En outre, le mode autonome de conduite peut être activé et désactivé généralement par un ou plusieurs appuis sur un ou deux boutons de commande situés sur le volant du véhicule automobile, par exemple réalisés par des boutons poussoirs. Dans certains modes de réalisation, un premier appui permet la sélection du mode de conduite autonome et un deuxième appui plus long permet la validation.

Un inconvénient à cela est que ces moyens d'activation/désactivation requièrent de la place disponible sur le volant alors que celui-ci intègre déjà de nombreuses autres fonctionnalités, telles que les commutateurs du klaxon, de l'autoradio, le régulateur de vitesse, le chauffage du volant et/ou des moyens de téléphonie.

On connaît par ailleurs du document DE 10 2007 029594 A1 un sélecteur selon le préambule de la revendication 1.

Un but de la présente invention est de proposer une interface pour véhicule automobile qui résout au moins en partie les inconvénients de l'état de la technique.

A cet effet, l'invention a pour objet un sélecteur d'une boite de vitesse automatique de véhicule automobile dans lequel les positions de commande du mode de stationnement, du mode de marche arrière, du mode de point mort, du mode de marche avant et du mode de conduite autonome peuvent être sélectionnées successivement en parcourant une course de déplacement de l'organe de commande, l'une à la place de l'autre, avec une disposition ordonnée prédéfinie, la position de commande du mode de conduite autonome étant située à une extrémité de ladite disposition ordonnée, successivement à la position de commande du mode de marche avant, de sorte que la position de commande du mode de conduite autonome puisse uniquement être sélectionnée après la sélection de la position de commande du mode de marche avant.

Ainsi, en déplaçant la sélection du mode de conduite autonome vers le sélecteur de la boite de vitesse automatique, l'utilisateur choisit avec un seul sélecteur tous les modes de conduite du véhicule. L'agencement de l'organe de commande permettant la sélection de la position de commande du mode de conduite autonome au niveau du sélecteur de la boite de vitesse automatique est ainsi plus intuitif pour le conducteur. Par ailleurs, le passage en mode de conduite autonome peut alors dépendre de la position de commande active de la boite de vitesse automatique. En outre, cela libère de la place au niveau du volant.

Selon une ou plusieurs caractéristiques du sélecteur d'une boite de vitesse automatique de véhicule automobile,
- ledit organe de commande est un bouton rotatif de commande, un levier pivotant ou un coulisseau de commande mobile linéairement,
- le sélecteur comporte un moyen de freinage programmable de l'organe de commande permettant d'opposer une force de résistance à l'utilisateur déplaçant l'organe de commande en fonction d'un signal d'une unité de commande,
- le sélecteur comporte un moyen de blocage de l'organe de commande configuré pour bloquer le déplacement de l'organe de commande vers la position de commande du mode de conduite autonome en fonction d'un signal de blocage d'un système de conduite autonome,
- le sélecteur comporte un capteur de force configuré pour mesurer une force exercée sur l'organe de commande,
- l'organe de commande est un bouton rotatif de commande, le capteur de force comportant au moins un capteur de couple pour mesurer le couple exercé sur l'organe de commande,
- le sélecteur comporte une unité de traitement reliée au capteur de force, configurée pour commander le moyen de freinage programmable afin d'autoriser le déplacement de l'organe de commande vers une position de commande sélectionnée par l'utilisateur lorsqu'un effort exercé sur l'organe de commande est supérieur à un seuil d'effort prédéterminé au-delà d'une durée prédéterminée,
- le sélecteur comporte un indicateur lumineux comportant des moyens d'éclairage progressifs pour modifier progressivement l'éclairage de l'indicateur lumineux en fonction de la durée de l'exercice de l'effort sur l'organe de commande au-delà du seuil d'effort prédéterminé,
- l'organe de commande est un bouton rotatif de commande et l'indicateur lumineux est un anneau entourant au moins partiellement l'organe de commande,
- le sélecteur comporte un module de fluide magnéto-rhéologique comprenant :
   - un fluide magnéto-rhéologique en contact avec un élément mobile de l'organe de commande,
   - une unité d'application d'un champ magnétique,
   - au moins une bobine pour appliquer un champ magnétique au fluide magnéto-rhéologique,
   - l'unité d'application d'un champ magnétique étant configurée pour modifier l'alimentation de la bobine afin de modifier une force de résistance générée à l'utilisateur déplaçant l'organe de commande,
- l'unité d'application d'un champ magnétique est configurée pour abaisser le champ magnétique appliqué au fluide magnéto-rhéologique lorsqu'un effort exercé sur l'organe de commande est supérieur à un seuil d'effort prédéterminé au-delà d'un seuil de durée prédéterminée,
- l'unité d'application d'un champ magnétique est configurée pour augmenter le champ magnétique appliqué au fluide magnéto-rhéologique de manière à bloquer l'orientation de l'organe de commande vers la position de commande du mode de conduite autonome en fonction d'une information d'un système de conduite autonome,
- le sélecteur comporte des voyants lumineux configurés pour s'éclairer en fonction de la position de commande sélectionnée par l'organe de commande,
- le sélecteur comporte un voyant lumineux configuré pour clignoter lorsque la position de commande du mode de conduite autonome est disponible.

L'invention a aussi pour objet un procédé de sélection du mode de conduite autonome caractérisé en ce qu'il est mis en œuvre par un sélecteur d'une boite de vitesse automatique de véhicule automobile tel que décrit précédemment, dans lequel :
- on exerce un effort sur l'organe de commande du sélecteur vers une position de commande à atteindre,
- on mesure l'intensité et/ou la durée de l'effort exercé sur l'organe de commande,
- on bloque le déplacement de l'organe de commande tant que l'intensité et/ou la durée de l'effort exercé sur l'organe de commande n'a pas atteint un seuil d'effort et/ou de durée prédéterminée,
- on libère le déplacement de l'organe de commande vers la position de commande à atteindre lorsque le seuil d'effort et/ou de durée prédéterminée est franchi.

On peut pendant que le déplacement de l'organe de commande est bloqué, afficher par un signal lumineux la progression de la durée pendant laquelle l'effort est exercé.

D'autres caractéristiques et avantages de l'invention ressortiront de la description suivante, donnée à titre d'exemple et sans caractère limitatif, en regard des dessins annexés sur lesquels :
- la figure 1 représente une vue schématique d'un exemple de réalisation d'un sélecteur,
- la figure 2 représente une vue schématique d'un exemple de réalisation d'un sélecteur comportant un module de fluide magnéto-rhéologique,
- la figure 3 représente un exemple de capteur de force d'un module de fluide magnéto-rhéologique,
- la figure 4a représente une première étape de fonctionnement du sélecteur,
- la figure 4b représente une deuxième étape de fonctionnement du sélecteur, successive à la première étape,
- la figure 4c représente une troisième étape de fonctionnement du sélecteur, successive à la deuxième étape, et
- la figure 4d représente une quatrième étape de fonctionnement du sélecteur, successive à la troisième étape.

Sur ces figures, les éléments identiques portent les mêmes numéros de référence.

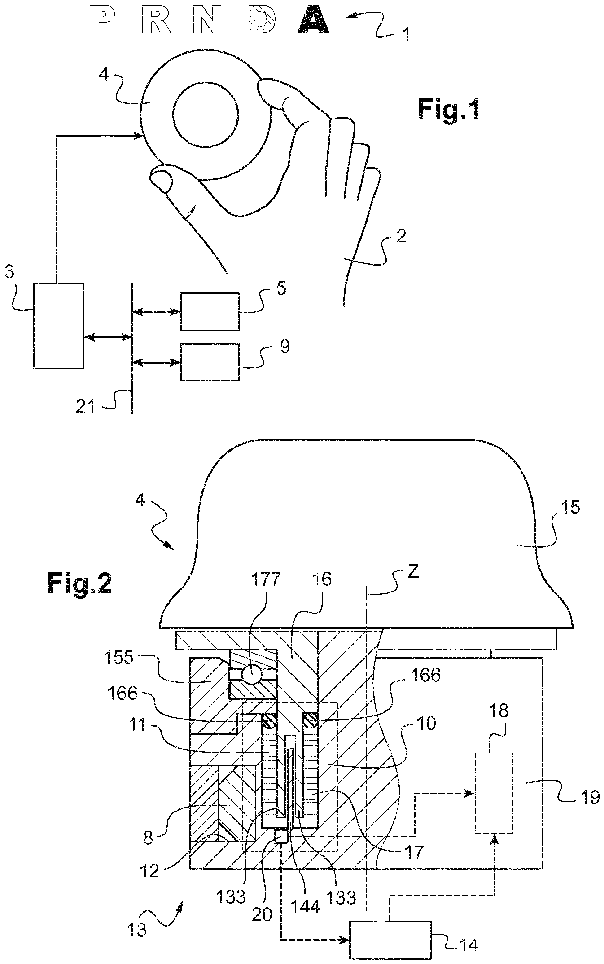

La figure 1 représente un sélecteur 1 d'une boite de vitesse automatique 9 de véhicule automobile.

Le sélecteur 1 comporte un organe de commande 4.

L'organe de commande 4 est mobile et manipulable par le conducteur 2. C'est par exemple un bouton rotatif de commande, un levier pivotant ou un coulisseau de commande mobile linéairement.

La figure 1 représente un exemple de réalisation d'un organe de commande 4 réalisé par un bouton rotatif de commande en forme d'anneau.

Le sélecteur 1 est par exemple agencé au niveau de la boite de vitesse automatique 9 entre les deux sièges avant du véhicule, à droite du siège conducteur et présente plusieurs positions de commande comme par exemple :
- un mode de stationnement P (ou « Park » en anglais) pour lequel les roues du véhicule sont bloquées,
- un mode de marche arrière R (ou « Reverse » en anglais) pour activer la marche arrière,
- un mode de point mort N (ou « Neutral » en anglais) dans lequel les roues sont débloquées,
- au moins un mode de marche avant D (ou « Drive » en anglais) pour lequel toutes les vitesses sont possibles, et
- un mode de conduite autonome A.

L'organe de commande 4 est configuré pour sélectionner une position de commande parmi ces différentes positions de commande en fonction de la volonté de l'utilisateur 2, chaque position de commande étant situé sur une course de déplacement que l'organe de commande 4 peut parcourir.

Le mode de conduite autonome A (ou mode de conduite automatique ou semi-automatique) permet au véhicule une conduite sans pilote, en totale autonomie ou semi-autonome. Pour cela, le véhicule comporte un système de conduite autonome 5 relié par exemple à des radars, à des moyens de télédétection par laser, à des caméras ou autres capteurs, permettant au véhicule de circuler sans pilote tout en gérant les éléments environnementaux extérieurs, tels que les feux stop, piétons, autres véhicules en mouvement ou à l'arrêt ou autres obstacles.

L'organe de commande 4 de boite de vitesse automatique 9 de certains modèles de véhicules sont également configurés pour prendre plusieurs position de commande du mode de marche avant D, comme une position de commande d'un mode de conduite citadine 3 (seules les trois premières vitesses sont utilisées) ou une position de commande d'un mode de conduite à faible allure S (pour « Second » en anglais) (seules les deux premières vitesses sont utilisées par exemple en cas de verglas, neige, frein moteur pour forte pente à descendre ...) ou une position de commande d'un mode de conduite à très faible allure L (pour « Low » en anglais) (maintient d'une conduite à faible allure en cas de verglas, forte côte à monter...). D'autres modèles proposent encore une position de commande d'un mode de conduite sportive S pour laquelle les changements de rapports s'effectuent pour des régimes plus élevés et la rétrogradation lors du freinage est plus rapide) ou une position de commande d'un mode de conduite hiver W (pour « Winter » en anglais) pour laquelle le premier rapport enclenché est la seconde, ce qui limite le risque de patinage des roues lors du démarrage sur route verglacée.

Les différentes positions de commande qui peuvent être sélectionnées par l'organe de commande 4 sont configurées pour pouvoir être sélectionnées successivement, le long d'une course de déplacement pouvant être parcourue par l'organe de commande, l'une à la place de l'autre, avec une disposition ordonnée prédéfinie.

Ainsi, en déplaçant la sélection du mode de conduite autonome A vers le sélecteur 1 de la boite de vitesse automatique 9, l'utilisateur 2 choisit avec un seul sélecteur 1 tous les modes de conduite du véhicule. L'agencement de l'organe de commande 4 permettant la sélection de la position de commande du mode de conduite autonome A au niveau du sélecteur 1 de la boite de vitesse automatique 9 est ainsi plus intuitif pour le conducteur.

Par ailleurs, le passage en mode de conduite autonome A peut alors dépendre de la position de commande active de la boite de vitesse automatique 9.

En outre, cela libère de la place au niveau du volant.

On prévoit par exemple et comme visible sur la figure 1 que la position de commande du mode de conduite autonome A soit située à une extrémité de la disposition ordonnée, successivement à la position de commande du mode de marche avant D de sorte que la position de commande du mode de conduite autonome A puisse uniquement être sélectionnée après la sélection de la position de commande d'un mode de marche avant A.

La disposition prédéfinie est par exemple alors dans l'ordre : la position de commande du mode de stationnement P, la position de commande du mode de marche arrière R, la position de commande du mode de point mort N, la position de commande du mode de marche avant D et la position de commande du mode de conduite autonome A.

On s'assure ainsi que le mode de conduite autonome A ne puisse être activé sans que le véhicule soit auparavant passé en mode de marche avant D.

Selon un exemple de réalisation, le sélecteur 1 comporte un moyen de freinage programmable de l'organe de commande 4 permettant d'opposer une force de résistance à l'utilisateur 2 déplaçant l'organe de commande 4 en fonction d'un signal d'une unité de commande 3.

La force de résistance opposée à l'utilisateur 2 peut alors varier et être pilotée par une unité de traitement 3 du sélecteur 1. On peut ainsi contrôler l'intensité de l'effort nécessaire à l'utilisateur 2 pour déplacer l'organe de commande 4 par logiciel, sans que ce contrôle ne soit limité par des contraintes mécaniques. En outre, cela permet d'ajouter une fonctionnalité empêchant l'autorisation du passage en mode de conduite autonome A dans certaines situations de conduite.

En effet, on peut prévoir que le sélecteur 1 comporte un moyen de blocage de l'organe de commande 4 configuré pour bloquer le déplacement de l'organe de commande 4 vers la position de commande du mode de conduite autonome A en fonction d'un signal de blocage d'un système de conduite autonome 5.

Le signal de blocage du système de conduite autonome 5 est lié à la situation routière. Il est envoyé à une unité de traitement 3 configurée pour piloter le moyen de blocage.

Le système de conduite autonome 5 est par exemple relié au dispositif de navigation du véhicule. On bloque par exemple le déplacement de l'organe de commande 4 vers la position de commande du mode de conduite autonome A lorsque le véhicule est localisé sur de petites routes ou hors autoroute.

Selon un autre exemple, le système de conduite autonome 5 comporte des capteurs, tel que des caméras ou radar, permettant d'évaluer la densité du trafic automobile pour décider si le mode de conduite autonome A est disponible ou pas.

Le moyen de blocage est par exemple mécanique, électrique ou magnétique.

Dans le cas où le sélecteur 1 comporte un moyen de freinage programmable de l'organe de commande 4, le moyen de blocage peut être réalisé par la programmation d'une force de résistance à l'utilisateur 2 déplaçant l'organe de commande 4 importante vers la position de commande du mode de conduite autonome A, bloquant le déplacement de l'organe de commande 4 vers cette position de commande.

Le sélecteur 1 peut comporter un capteur de force 21 configuré pour mesurer une force exercée sur l'organe de commande 4.

Dans le cas d'un organe de commande 4 réalisé par un bouton rotatif de commande, le capteur de force 21 comporte au moins un capteur de couple pour mesurer le couple exercé sur l'organe de commande 4.

Le capteur de force 21 permet de mesurer la force exercée sur l'organe de commande 4, par exemple par une technologie piézo-résistive, capacitive, résistive ou tout autre technologie connue de l'homme du métier pour détecter une variation de force comme par exemple des jauges de contrainte, etc...

L'unité de traitement 3 est reliée au capteur de force 21 et peut être configurée pour commander le moyen de freinage programmable afin d'autoriser le déplacement de l'organe de commande 4 vers une position de commande sélectionnée par le conducteur 2, et commander ladite position de commande sélectionnée à la boite de vitesse automatique 9, lorsqu'un effort exercé sur l'organe de commande 4 est supérieur à un seuil d'effort prédéterminé au-delà d'un seuil de durée prédéterminée.

La position de commande sélectionnée est l'une des positions de commande des modes P, R, N, D, A successifs pouvant être sélectionnés par l'organe de commande 4 dans la disposition ordonnée prédéfinie.

L'unité de traitement 3 envoie par exemple l'information de la position de commande sélectionnée sur le bus CAN 21 du véhicule automobile, également relié à la boite de vitesse automatique 9 et au système de conduite autonome 5.

On peut en outre prévoir que le sélecteur 1 comporte un indicateur lumineux 7 comportant des moyens d'éclairage progressifs pour modifier progressivement l'éclairage de l'indicateur lumineux 7 en fonction de la durée de l'exercice de l'effort sur l'organe de commande 4 au-delà du seuil d'effort prédéterminé.

Les moyens d'éclairage progressifs comportent par exemple un ensemble de LED, les LEDs s'allumant successivement en fonction de la durée de l'exercice de l'effort sur l'organe de commande 4.

L'indicateur lumineux 7 forme par exemple un chemin lumineux, présentant une forme de cercle ou de ligne, dont l'éclairage est progressivement modifié, le chemin lumineux étant complètement modifié à la fin de la durée prédéterminée. La modification de l'éclairage pouvant être par exemple l'allumage progressif du chemin lumineux ou son changement progressif de couleur.

Dans le cas d'un organe de commande 4 réalisé par un bouton rotatif de commande, l'indicateur lumineux 7 peut être un anneau entourant au moins partiellement l'organe de commande 4. On modifie ainsi l'éclairage de la périphérie de l'anneau lumineux 7 de manière progressive sur 360° lorsque l'effort exercé sur l'organe de commande 4 est supérieur au seuil d'effort prédéterminé.

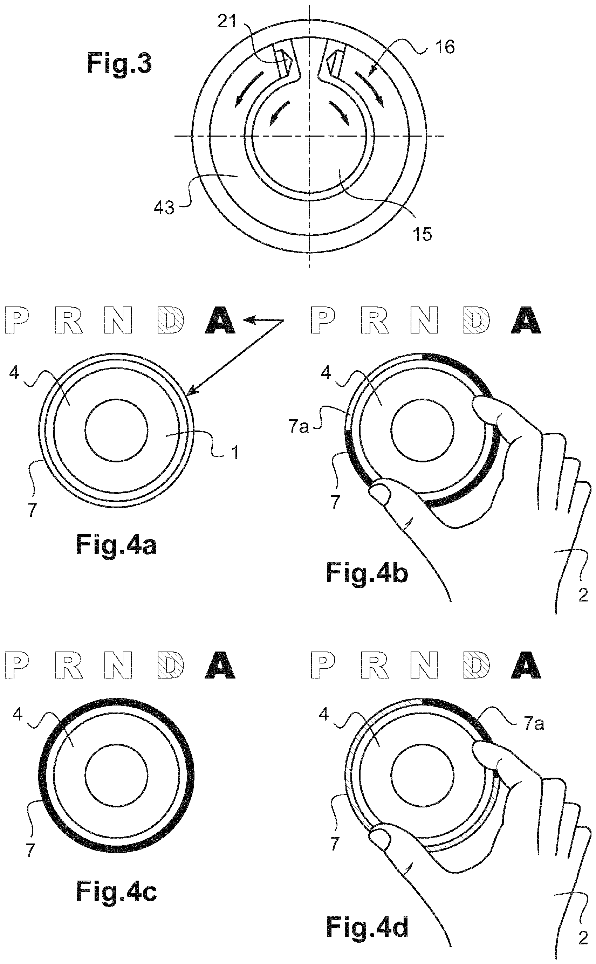

Une portion 7a non éclairée de l'indicateur lumineux 7 (figure 4b) ou éclairée d'une couleur différente (figure 4d), correspond à la durée restant à s'écouler avant que le changement de position P, R, N, D, A ne soit autorisé. L'utilisateur 2 peut ainsi visualiser que sa commande a bien été prise en compte. L'animation de l'affichage lui permet également d'estimer le temps qu'il lui reste à maintenir l'effort exercé sur l'organe de commande 4 pour changer la position de commande.

Le sélecteur 1 peut en outre comporter des voyants lumineux, par exemple autant de voyants lumineux que de positions de commande pouvant être sélectionnées par l'organe de commande 4, configurés pour s'éclairer en fonction de la position de commande sélectionnée par l'organe de commande 4.

Les voyants lumineux présentent par exemple une forme de lettre, telle que les lettres P, R, D, N, A.

On peut en outre associer une couleur distincte pour le voyant lumineux indiquant la position de commande du mode de conduite autonome A.

Un voyant lumineux A peut être configuré pour clignoter lorsque la position de commande du mode de conduite autonome A est disponible.

Selon un exemple de réalisation mieux visible sur la figure 2, le sélecteur 1 comporte un module de fluide magnéto-rhéologique 13 comprenant :
- un fluide magnéto-rhéologique 17 en contact avec un élément mobile 16 de l'organe de commande 4, mobile en rotation (figure 2) ou translation,
- une unité d'application d'un champ magnétique 14,
- au moins une bobine 18 pour appliquer un champ magnétique au fluide magnéto-rhéologique 17,
- l'unité d'application d'un champ magnétique 14 étant configurée pour modifier l'alimentation de la bobine 18 afin de modifier une force de résistance opposée à l'utilisateur 2 déplaçant l'élément mobile 16 de l'organe de commande 4.

L'organe de commande 4 peut comporter un élément de préhension 15, solidaire de l'élément mobile 16, c'est-à-dire rigidement lié à l'élément mobile 16. L'élément de préhension 15 est par exemple fait de matière avec l'élément mobile 16 ou clipsé sur l'élément mobile 16 ou fixé par goupillon ou par tout autre moyen de fixation connu. Alternativement, l'élément de préhension 15 peut être couplé à l'élément mobile 16 via un système d'engrenages, chaînes, courroies ou tout autre moyen mécanique permettant d'assurer un couplage entre l'élément de préhension 15 et l'élément mobile 16.

Un retour haptique est généré à l'utilisateur qui déplace l'élément mobile 16, par exemple via l'élément de préhension 15, par modification du champ magnétique appliqué au fluide magnéto-rhéologique 17. On désigne par « haptique » un retour par le toucher, tel qu'une force de résistance variable.

En effet, le fluide magnéto-rhéologique 17 présente la propriété que sa viscosité varie sous l'effet d'un champ magnétique variable. Ainsi, la force de résistance induite par le fluide magnéto-rhéologique 17 est faible lorsqu'aucun champ magnétique n'est appliqué et devient de plus en plus importante lorsque l'intensité du champ magnétique augmente. Les fluides magnéto-rhéologiques peuvent ainsi être utilisés en tant que freins magnéto-rhéologique. Par exemple, l'application d'une intensité en forme de créneau permet de créer des points durs au niveau de points d'indexage pour lesquels l'intensité est importante.

Le champ magnétique créé par une bobine 18 étant proportionnel au courant qui la traverse, on peut faire varier l'intensité du champ magnétique créé au centre de la bobine 18 en faisant varier l'alimentation de la bobine 18. La variation de l'intensité du champ magnétique appliqué au fluide magnéto-rhéologique 17, permet de faire varier la viscosité du fluide, et ainsi la force de résistance exercée par le fluide. On peut ainsi faire varier ou moduler la force avec laquelle l'élément mobile 16 peut être déplacé pour générer un retour haptique spécifique à l'utilisateur 2 manipulant l'élément mobile 16.

Le module de fluide magnéto-rhéologique 13 peut en outre comporter un capteur de position 20, configuré pour mesurer la position de déplacement de l'élément mobile 16, telle que la position angulaire dans le cas illustré d'un élément mobile 16 rotatif. Il peut par exemple comporter un encodeur, tel qu'un encodeur optique ou un dispositif piézo-électrique. Le capteur de position peut être situé à différents endroits à proximité de l'élément mobile 16.

Le capteur de couple 21 peut par exemple fournir un signal, telle qu'une tension de sortie, représentatif de l'intensité de l'effort exercé sur l'élément mobile 16. Il peut en outre, en même temps, fournir un sens de rotation de l'élément mobile 16.

Dans l'exemple de réalisation de la figure 3, l'élément de préhension 15 est monté pivotant par rapport à une bague 43 de l'élément mobile 16, le pivotement de l'élément de préhension 15 étant bloqué par deux capteurs de couple 21 situés entre l'élément de préhension 15 et la bague 43 de l'élément mobile 16.

Alternativement, un seul capteur de couple 21 peut être utilisé, par exemple en appliquant une précontrainte au capteur, la rotation de l'élément de préhension 15 dans un sens entraînant une sous-contrainte détectable tandis que la rotation dans l'autre sens entraîne une sur-contrainte également détectable.

Selon l'exemple de réalisation illustré sur la figure 2, le module de fluide magnéto-rhéologique 13 comporte une embase 19 présentant une forme générale cylindrique s'étendant selon un axe de rotation Z du module 13, obturée à l'une de ses extrémités par un axe central fixe 10 orienté selon l'axe de rotation Z, définissant une cavité annulaire 11. L'élément rotatif 16 est monté rotatif sur l'embase 19 fixe, autour de l'axe de rotation Z.

La cavité 11 est destinée à recevoir d'une part le fluide magnéto-rhéologique 17 et d'autre part une extrémité de l'élément rotatif 16. L'élément rotatif 16 est alors partiellement immergé dans le fluide magnéto-rhéologique 17. L'embase 19 présente également un logement annulaire 12 qui entoure au moins partiellement la cavité 11. Le logement annulaire 12 reçoit une ou plusieurs bobine(s) 18 qui, avec son (leurs) alimentation(s) (non représentée(s)), forme l'unité d'application d'un champ magnétique 14 sur le fluide magnéto-rhéologique 17.

La force de résistance appliquée par le fluide magnéto-rhéologique 17 sur l'élément rotatif 16 varie en fonction de la surface de fluide en contact avec l'élément rotatif 16. Ainsi, l'extrémité de l'élément rotatif 16 en contact avec le fluide magnéto-rhéologique 17 peut comporter plusieurs parois d'extrémité 133 cylindriques et concentriques, s'étendant selon l'axe de rotation Z, et venant en regard de parois complémentaires s'étendant depuis le fond de la cavité 11. Par exemple, l'embase 9 comporte une paroi complémentaire 144, venant s'intercaler entre les parois d'extrémité 133 de l'élément rotatif 16 pour augmenter les surfaces en regard entre l'élément rotatif 16 et l'embase 19 et ainsi augmenter le couple de force que l'on peut exercer sur l'élément rotatif 16 avec une alimentation donnée.

Le module de fluide magnéto-rhéologique 13 comporte en outre des joints 166, par exemple intercalés d'une part, entre la cavité 11 et un couvercle 155 fermant la cavité 11 et d'autre part, entre la cavité 11 et un épaulement de l'élément rotatif 16. Les joints 166 assurent l'étanchéité pour éviter toute fuite du fluide magnéto-rhéologique 17 hors de la cavité 11. Le couvercle 155 comprend également un logement recevant un palier ou roulement à billes 177 qui assure la liaison en rotation entre l'embase 19 et l'élément rotatif 16.

Différentes formes ou profils de retour haptique peuvent être obtenus.

Par exemple, l'intensité du champ magnétique peut avoir une forme en créneau dans laquelle l'intensité est nulle ou faible sauf au niveau des positions P, R, N, D, A où cette intensité est forte de manière à créer une force de résistance importante.

Le traitement des signaux issus du capteur de position 20 et du capteur de force 21 est réalisé par l'unité de traitement 3 qui pilote l'unité d'application d'un champ magnétique 14, programmant ainsi le moyen de freinage de l'organe de commande 4 permettant d'opposer une force de résistance à l'utilisateur 2 déplaçant l'organe de commande 4.

On peut prévoir que l'unité d'application d'un champ magnétique 14 soit configurée pour abaisser le champ magnétique appliqué au fluide magnéto-rhéologique 17 lorsque l'effort exercé sur l'organe de commande 4 est supérieur à un seuil d'effort prédéterminé au-delà d'un seuil de durée prédéterminée, selon un exemple de réalisation du moyen de freinage programmable.

En outre, on peut prévoir que l'unité d'application d'un champ magnétique 14 soit configurée pour augmenter le champ magnétique appliqué au fluide magnéto-rhéologique 17 de manière à bloquer le déplacement de l'organe de commande 4 vers la position de commande du mode de conduite autonome A en fonction du signal de blocage du système de conduite autonome 5, selon un exemple de réalisation du moyen de blocage de l'organe de commande 4.

On va décrire un exemple de fonctionnement en référence aux figures 4a, 4b, 4c, 4d.

On considère tout d'abord que l'organe de commande 4 de la boite de vitesse automatique 9 sélectionne la position de commande du mode de marche avant D (figure 4a). La lettre D est éclairée. L'anneau lumineux 7 est éteint. En outre, la lettre A clignote (par exemple d'une autre couleur que la lettre D) pour indiquer au conducteur que la situation routière autorise le passage en mode de conduite autonome A.

Si l'utilisateur 2 souhaite basculer en mode de conduite autonome A, il exerce un couple sur le bouton rotatif de commande 4 vers la position de commande à atteindre.

On mesure l'intensité et/ou la durée de l'effort exercé sur le bouton rotatif de commande 4.

On bloque le déplacement du bouton rotatif de commande 4 tant que l'intensité et/ou la durée de l'effort exercé sur le bouton rotatif de commande 4 n'a pas atteint un seuil d'effort et/ou de durée prédéfini. Pour cela, l'intensité du champ magnétique appliquée sur le fluide magnéto-rhéologique 17 est importante de manière à créer une force de résistance bloquant la mobilité du bouton rotatif de commande 4 qui ne tourne pas.

Pendant que le déplacement du bouton rotatif de commande 4 est bloqué, on affiche par un signal lumineux la progression de la durée de l'exercice de l'effort. La périphérie de l'anneau lumineux 7 s'éclaire alors de manière progressive, en fonction de la durée pendant laquelle l'effort est exercé sur le bouton rotatif de commande 4, tant que l'effort exercé est supérieur au seuil d'effort prédéterminé et jusqu'à ce que le temps dépasse le seuil de durée prédéterminée (figure 4b).

La couleur de l'éclairage de l'anneau lumineux 7 en progression est par exemple la même que celle de la lettre A indiquant la position de commande du mode de conduite autonome A.

Lorsque le seuil de durée prédéterminée est atteint, la position de commande du mode de conduite autonome A est activée. La lettre A est éclairée tandis que la lettre D s'éteint.

En outre, on libère le déplacement du bouton rotatif de commande 4 vers la position de commande à atteindre lorsque le seuil d'effort et/ou de durée prédéterminée est franchi. Pour cela, l'unité d'application d'un champ magnétique 14 abaisse le champ magnétique appliqué au fluide magnéto-rhéologique 17, laissant l'élément mobile 16 tourner (figure 4c).

Pour revenir en mode de conduite de marche avant D, l'utilisateur 2 exerce par exemple un couple dans le sens de rotation contraire sur le bouton rotatif de commande 4.

Par contre, de façon générale et similaire à des commandes de régulation de vitesse, toute intervention du conducteur dans la conduite, par exemple un freinage, un débrayage, une action sur le volant ou sur l'accélérateur fait passer automatiquement le sélecteur 1 en mode de marche avant D. Par son action volontaire, le conducteur manifeste son souhait d'abandonner le mode de conduite autonome A et de reprendre le véhicule en mains.

De la même manière, le couple exercé est mesuré par le capteur de force 21. La périphérie de l'anneau lumineux 7 change de couleur alors de manière progressive tant que l'effort exercé sur le bouton rotatif de commande 4 est supérieur au seuil d'effort prédéterminé et jusqu'à ce que le temps dépasse le seuil de durée prédéterminée (figure 4d).

Lorsque le seuil de durée prédéterminée est atteint, la position de commande du mode de conduite autonome A est désactivée et la position de commande du mode de marche avant D est sélectionnée.

La lettre D est éclairée tandis que la lettre A clignote (figure 4a).

En outre, avec un organe de commande 4 programmable et rotatif, il n'est pas nécessaire que l'utilisateur 2 repositionne l'organe de commande 4 dans sa position initiale.

## Revendications

1. Sélecteur (1) d'une boite de vitesse automatique (9) de véhicule automobile présentant au moins une position de commande d'un mode de stationnement (P), une position de commande d'un mode de marche arrière (R), une position de commande d'un mode de point mort (N) et au moins une position de commande d'un mode de marche avant (D), comportant un organe de commande (4) configuré pour sélectionner une position de commande parmi ces positions de commande, ledit sélecteur (1) comportant en outre une position de commande d'un mode de conduite autonome (A) et en ce que l'organe de commande (4) est configuré pour pouvoir sélectionner ce mode de conduite autonome (A), **caractérisé en ce que** les positions de commande du mode de stationnement (P), du mode de marche arrière (R), du mode de point mort (N), du mode de marche avant (D) et du mode de conduite autonome (A) peuvent être sélectionnées successivement en parcourant une course de déplacement de l'organe de commande (4), l'une à la place de l'autre, avec une disposition ordonnée prédéfinie, la position de commande du mode de conduite autonome (A) étant située à une extrémité de ladite disposition ordonnée, successivement à la position de commande du mode de marche avant (D), de sorte que la position de commande du mode de conduite autonome (A) puisse uniquement être sélectionnée après la sélection de la position de commande du mode de marche avant (D).

2. Sélecteur (1) d'une boite de vitesse automatique (9) selon la revendication précédente, **caractérisé en ce que** ledit organe de commande (4) est un bouton rotatif de commande, un levier pivotant ou un coulisseau de commande mobile linéairement.

3. Sélecteur (1) d'une boite de vitesse automatique (9) selon l'une des revendications précédentes, **caractérisé en ce qu'**il comporte un moyen de freinage programmable de l'organe de commande (4) permettant d'opposer une force de résistance à l'utilisateur (2) déplaçant l'organe de commande (4) en fonction d'un signal d'une unité de commande (3).

4. Sélecteur (1) d'une boite de vitesse automatique (9) selon l'une des revendications précédentes, **caractérisé en ce qu'**il comporte un moyen de blocage de l'organe de commande (4) configuré pour bloquer le déplacement de l'organe de commande (4) vers la position de commande du mode de conduite autonome (A) en fonction d'un signal de blocage d'un système de conduite autonome (5).

5. Sélecteur (1) d'une boite de vitesse automatique (9) selon l'une des revendications précédentes, **caractérisé en ce qu'**il comporte un capteur de force (21) configuré pour mesurer une force exercée sur l'organe de commande (4).

6. Sélecteur (1) d'une boite de vitesse automatique (9) selon la revendication précédente, **caractérisé en ce que** l'organe de commande (4) est un bouton rotatif de commande, le capteur de force (21) comportant au moins un capteur de couple pour mesurer le couple exercé sur l'organe de commande (4).

7. Sélecteur (1) d'une boite de vitesse automatique (9) selon l'une des revendications 5 ou 6, prise ensemble avec la revendication 3, **caractérisé en ce qu'**il comporte une unité de traitement (3) reliée au capteur de force (21), configurée pour commander le moyen de freinage programmable afin d'autoriser le déplacement de l'organe de commande (4) vers une position de commande sélectionnée par l'utilisateur (2) lorsqu'un effort exercé sur l'organe de commande (4) est supérieur à un seuil d'effort prédéterminé au-delà d'une durée prédéterminée.

8. Sélecteur (1) d'une boite de vitesse automatique (9) selon l'une des revendications précédentes, **caractérisé en ce qu'**il comporte un module de fluide magnéto-rhéologique (13) comprenant :
- un fluide magnéto-rhéologique (17) en contact avec un élément mobile (16) de l'organe de commande (4),
- une unité d'application d'un champ magnétique (14),
- au moins une bobine (18) pour appliquer un champ magnétique au fluide magnéto-rhéologique (17),
- l'unité d'application d'un champ magnétique (14) étant configurée pour modifier l'alimentation de la bobine (18) afin de modifier une force de résistance générée à l'utilisateur déplaçant l'organe de commande (4).

9. Sélecteur (1) d'une boite de vitesse automatique (9) selon la revendication précédente, **caractérisé en ce que** l'unité d'application d'un champ magnétique (14) est configurée pour abaisser le champ magnétique appliqué au fluide magnéto-rhéologique (7) lorsqu'un effort exercé sur l'organe de commande (4) est supérieur à un seuil d'effort prédéterminé au-delà d'un seuil de durée prédéterminée.

10. Sélecteur (1) d'une boite de vitesse automatique (9) selon l'une des revendications 8 ou 9, **caractérisé en ce que** l'unité d'application d'un champ magnétique (14) est configurée pour augmenter le champ magnétique appliqué au fluide magnéto-rhéologique (17) de manière à bloquer l'orientation de l'organe de commande (4) vers la position de commande du mode de conduite autonome (A) en fonction d'une information d'un système de conduite autonome (5).

11. Sélecteur (1) d'une boite de vitesse automatique (9) selon l'une des revendications précédentes, **caractérisé en ce qu'**il comporte des voyants lumineux (P, R, D, N, A) configurés pour s'éclairer en fonction de la position de commande sélectionnée par l'organe de commande (4).

12. Sélecteur (1) d'une boite de vitesse automatique (9) selon l'une des revendications précédentes, **caractérisé en ce qu'**il comporte un voyant lumineux (A) configuré pour clignoter lorsque la position de commande du mode de conduite autonome (A) est disponible.

13. Procédé de sélection du mode de conduite autonome (A) **caractérisé en ce qu'**il est mis en œuvre par un sélecteur (1) d'une boite de vitesse automatique (9) de véhicule automobile selon l'une des revendications précédentes, dans lequel :
- on exerce un effort sur l'organe de commande (4) du sélecteur (1) vers une position de commande à atteindre,
- on mesure l'intensité et/ou la durée de l'effort exercé sur l'organe de commande (4),
- on bloque le déplacement de l'organe de commande (4) tant que l'intensité et/ou la durée de l'effort exercé sur l'organe de commande (4) n'a pas atteint un seuil d'effort et/ou de durée prédéterminée, et
- on libère le déplacement de l'organe de commande (4) vers la position de commande à atteindre lorsque le seuil d'effort et/ou de durée prédéterminée est franchi.

## Patentansprüche

1. Wahlvorrichtung (1) für ein Automatikgetriebe (9) eines Kraftfahrzeugs, die mindestens eine Steuerposition für einen Parkmodus (P), eine Steuerposition für einen Rückwärtsfahrmodus (R), eine Steuerposition für einen Leerlaufmodus (N) und mindestens eine Steuerposition für einen Vorwärtsfahrmodus (D) aufweist und ein Steuerelement (4) beinhaltet, das dazu ausgestaltet ist, eine Steuerposition unter diesen Steuerpositionen zu wählen, wobei die Wahlvorrichtung (1) ferner eine Steuerposition für einen autonomen Fahrmodus (A) beinhaltet und, dass das Steuerelement (4) dazu ausgestaltet ist, diesen autonomen Fahrmodus (A) wählen zu können, **dadurch gekennzeichnet, dass** die Steuerpositionen für den Parkmodus (P), für den Rückwärtsfahrmodus (R), für den Leerlaufmodus (N), für den Vorwärtsfahrmodus (D) und für den autonomen Fahrmodus (A) nacheinander, die eine anstelle der anderen, mit einer vorgegebenen geordneten Anordnung, gewählt werden können, indem ein Verlagerungsweg des Steuerelements (4) durchlaufen wird, wobei die Steuerposition für den autonomen Fahrmodus (A) an einem Ende der geordneten Anordnung im Anschluss an die Steuerposition für den Vorwärtsfahrmodus (D) gelegen ist, so dass die Steuerposition für den autonomen Fahrmodus (A) erst nach dem Wählen der Steuerposition für den Vorwärtsfahrmodus (D) gewählt werden kann.

2. Wahlvorrichtung (1) für ein Automatikgetriebe (9) nach dem vorhergehenden Anspruch, **dadurch gekennzeichnet, dass** das Steuerelement (4) ein Steuerdrehknopf, ein schwenkbarer Hebel oder eine linear bewegliche Schaltkulisse ist.

3. Wahlvorrichtung (1) für ein Automatikgetriebe (9) nach einem der vorhergehenden Ansprüche, **dadurch gekennzeichnet, dass** sie eine programmierbare Bremseinrichtung für das Steuerelement (4) beinhaltet, die es ermöglicht, dem Benutzer (2), der das Steuerelement (4) bewegt, in Abhängigkeit von einem Signal einer Steuerungseinheit (3) eine Gegenkraft entgegenzusetzen.

4. Wahlvorrichtung (1) für ein Automatikgetriebe (9) nach einem der vorhergehenden Ansprüche, **dadurch gekennzeichnet, dass** sie eine Blockiereinrichtung für das Steuerelement (4) beinhaltet, die dazu ausgestaltet ist, die Verlagerung des Steuerelements (4) hin zur Steuerposition für den autonomen Fahrmodus (A) in Abhängigkeit von einem Blockiersignal eines Systems zum autonomen Fahren (5) zu blockieren.

5. Wahlvorrichtung (1) für ein Automatikgetriebe (9) nach einem der vorhergehenden Ansprüche, **dadurch gekennzeichnet, dass** sie einen Kraftsensor (21) beinhaltet, der dazu ausgestaltet ist, eine auf das Steuerelement (4) ausgeübte Kraft zu messen.

6. Wahlvorrichtung (1) für ein Automatikgetriebe (9) nach dem vorhergehenden Anspruch, **dadurch gekennzeichnet, dass** das Steuerelement (4) ein Steuerdrehknopf ist, wobei der Kraftsensor (21) mindestens einen Drehmomentsensor zum Messen des auf das Steuerelement (4) ausgeübten Drehmoments beinhaltet.

7. Wahlvorrichtung (1) für ein Automatikgetriebe (9) nach einem der Ansprüche 5 oder 6 in Kombination mit Anspruch 3, **dadurch gekennzeichnet, dass** sie eine mit dem Kraftsensor (21) verbundene Verarbeitungseinheit (3) beinhaltet, die dazu ausgestaltet ist, die programmierbare Bremseinrichtung zu steuern, um die Verlagerung des Steuerelements (4) hin zu einer vom Benutzer (2) gewählten Steuerposition zuzulassen, wenn eine auf das Steuerelement (4) ausgeübte Kraft über eine vorbestimmte Zeit hinaus größer als ein vorbestimmter Kraftschwellenwert ist.

8. Wahlvorrichtung (1) für ein Automatikgetriebe (9) nach einem der vorhergehenden Ansprüche, **dadurch gekennzeichnet, dass** sie ein Modul (13) mit magnetorheologischer Flüssigkeit beinhaltet, das umfasst:
- eine magnetorheologische Flüssigkeit (17), die mit einem beweglichen Teil (16) des Steuerelements (4) in Kontakt steht,
- eine Magnetfeld-Anlegeeinheit (14),
- mindestens eine Spule (18) zum Anlegen eines Magnetfeldes an die magnetorheologische Flüssigkeit (17),
- wobei die Magnetfeld-Anlegeeinheit (14) dazu ausgestaltet ist, die Stromversorgung der Spule (18) zu ändern, um eine Gegenkraft zu ändern, die gegenüber dem Benutzer, der das Steuerelement (4) verlagert, generiert wird.

9. Wahlvorrichtung (1) für ein Automatikgetriebe (9) nach dem vorhergehenden Anspruch, **dadurch gekennzeichnet, dass** die Magnetfeld-Anlegeeinheit (14) dazu ausgestaltet ist, das an die magnetorheologische Flüssigkeit (7) angelegte Magnetfeld zu verringern, wenn eine auf das Steuerelement (4) ausgeübte Kraft über einen vorbestimmten Zeitschwellenwert hinaus größer als ein vorbestimmter Kraftschwellenwert ist.

10. Wahlvorrichtung (1) für ein Automatikgetriebe (9) nach einem der Ansprüche 8 oder 9, **dadurch gekennzeichnet, dass** die Magnetfeld-Anlegeeinheit (14) dazu ausgestaltet ist, das an die magnetorheologische Flüssigkeit (17) angelegte Magnetfeld zu verstärken, so dass das Ausrichten des Steuerelements (4) hin zur Steuerposition für den autonomen Fahrmodus (A) in Abhängigkeit von einer Information eines Systems zum autonomen Fahren (5) blockiert wird.

11. Wahlvorrichtung (1) für ein Automatikgetriebe (9) nach einem der vorhergehenden Ansprüche, **dadurch gekennzeichnet, dass** sie Leuchtmelder (P, R, D, N, A) beinhaltet, die dazu ausgestaltet sind, in Abhängigkeit von der vom Steuerelement (4) gewählten Steuerposition aufzuleuchten.

12. Wahlvorrichtung (1) für ein Automatikgetriebe (9) nach einem der vorhergehenden Ansprüche, **dadurch gekennzeichnet, dass** sie einen Leuchtmelder (A) beinhaltet, der dazu ausgestaltet ist zu blinken, wenn die Steuerposition für das autonome Fahren (A) verfügbar ist.

13. Verfahren zum Wählen des autonomen Fahrmodus (A), **dadurch gekennzeichnet, dass** es von einer Wahlvorrichtung (1) für ein Automatikgetriebe (9) eines Kraftfahrzeugs nach einem der vorhergehenden Ansprüche umgesetzt wird, bei dem:
- eine Kraft auf das Steuerelement (4) der Wahlvorrichtung (1) hin zu einer zu erreichenden Steuerposition ausgeübt wird,
- die Intensität und/oder die Dauer der auf das Steuerelement (4) ausgeübten Kraft gemessen wird,
- das Verlagern des Steuerelements (4) blockiert wird, solange die Intensität und/oder die Dauer der auf das Steuerelement (4) ausgeübten Kraft einen Kraft- und/oder einen vorbestimmten Zeitschwellenwert nicht erreicht hat, und
- das Verlagern des Steuerelements (4) hin zu der zu erreichenden Steuerposition freigegeben wird, wenn der Kraft- und/oder der vorbestimmte Zeitschwellenwert überschritten ist.

## Claims

1. Selector (1) of an automatic gearbox (9) for a motor vehicle, having at least a parking mode command position (P), a reverse mode command position (R), a neutral mode command position (N) and at least one forward mode command position (D), comprising a control member (4) configured to select a command position from among these command positions, said selector (1) additionally comprising an autonomous driving mode command position (A) and in that the control member (4) is configured to be able to select this autonomous driving mode (A), **characterized in that** the parking mode (P), reverse mode (R), neutral mode (N), forward mode (D) and autonomous driving mode (A) command positions can be selected successively by running through a movement path of the control member (4), one in place of the other, with a predefined ordered arrangement, the autonomous driving mode command position (A) being situated at one end of said ordered arrangement, successively to the forward mode command position (D), with the result that the autonomous driving mode command position (A) can only be selected after the selection of the forward mode command position (D).

2. Selector (1) of an automatic gearbox (9) according to the preceding claim, **characterized in that** said control member (4) is a rotary control button, a pivoting lever or a linearly movable control slide.

3. Selector (1) of an automatic gearbox (9) according to either one of the preceding claims, **characterized in that** it comprises a programmable means for braking the control member (4) that makes it possible to put up a resistance force to the user (2) moving the control member (4) as a function of a signal from a control unit (3) .

4. Selector (1) of an automatic gearbox (9) according to one of the preceding claims, **characterized in that** it comprises a means for blocking the control member (4) configured to block the movement of the control member (4) towards the autonomous driving mode command position (A) as a function of a signal for blocking an autonomous driving system (5).

5. Selector (1) of an automatic gearbox (9) according to one of the preceding claims, **characterized in that** it comprises a force sensor (21) configured to measure a force exerted on the control member (4).

6. Selector (1) of an automatic gearbox (9) according to the preceding claim, **characterized in that** the control member (4) is a rotary control button, the force sensor (21) comprising at least one torque sensor for measuring the torque exerted on the control member (4).

7. Selector (1) of an automatic gearbox (9) according to either of Claims 5 and 6, taken together with Claim 3, **characterized in that** it comprises a processing unit (3) connected to the force sensor (21) and configured to control the programmable braking means in order to allow the movement of the control member (4) towards a command position selected by the user (2) when a force exerted on the control member (4) is greater than a predetermined force threshold beyond a predetermined duration.

8. Selector (1) of an automatic gearbox (9) according to one of the preceding claims, **characterized in that** it comprises a magnetorheological fluid module (13) comprising:
- a magnetorheological fluid (17) in contact with a movable element (16) of the control member (4),
- a magnetic field application unit (14),
- at least one coil (18) for applying a magnetic field to the magnetorheological fluid (17),
- the magnetic field application unit (14) being configured to modify the energization of the coil (18) so as to modify a resistance force generated to the user moving the control member (4).

9. Selector (1) of an automatic gearbox (9) according to the preceding claim, **characterized in that** the magnetic field application unit (14) is configured to lower the magnetic field applied to the magnetorheological fluid (7) when a force exerted on the control member (4) is above a predetermined force threshold beyond a predetermined duration threshold.

10. Selector (1) of an automatic gearbox (9) according to either of Claims 8 and 9, **characterized in that** the magnetic field application unit (14) is configured to increase the magnetic field applied to the magnetorheological fluid (17) so as to block the orientation of the control member (4) toward the autonomous driving mode command position (A) as a function of an item of information from an autonomous driving system (5).

11. Selector (1) of an automatic gearbox (9) according to one of the preceding claims, **characterized in that** it comprises luminous indicators (P, R, D, N, A) configured to light up as a function of the command position selected by the control member (4).

12. Selector (1) of an automatic gearbox (9) according to one of the preceding claims, **characterized in that** it comprises a luminous indicator (A) configured to flash when the autonomous driving mode command position (A) is available.

13. Method for selecting the autonomous driving mode (A), **characterized in that** it is implemented by a selector (1) of an automatic gearbox (9) for a motor vehicle according to one of the preceding claims, in which:
- a force is exerted on the control member (4) of the selector (1) towards a command position to be reached,
- the intensity and/or the duration of the force exerted on the control member (4) are/is measured,
- the movement of the control member (4) is blocked for as long as the intensity and/or the duration of the force exerted on the control member (4) has not reached a predetermined force and/or duration threshold and
- the movement of the control member (4) towards the command position to be reached is freed when the predetermined force and/or duration threshold is crossed.
